# EUROPEAN PATENT APPLICATION

(11) **EP 3 572 919 A1**
(43) Date of publication of application: **27.11.2019**
(21) Application number: 17892649.9
(22) Date of filing: 13.12.2017
(51) Int. Cl.: G06F 3/0482

(54) **SYSTEM AND METHOD FOR IMPLEMENTING PRESSURE FUNCTION OF APPLICATION**

(30) Priority: 17.01.2017 CN 201710033792
(71) Applicant: ZTE Corporation, Shenzhen, Guangdong 518057 (CN)
(72) Inventor: ZHANG, Tao, Shenzhen Guangdong 518057 (CN)
(74) Representative: Aipex B.V.
(86) International application number: PCT/CN2017/115988
(87) International publication number: WO 2018/133595

(57) **Abstract**

Provided are a system and method for implementing pressure function of an application. The system includes an information parsing module (110), configured to parse (SI01) pressure information from an installation package of the application according to a preset pressure information configuration specification when it is detected that the application is installed or updated on a terminal; and a configuration module, configured to configure (S102) pressure operation information of the application according to the pressure information. One problem that is solved is that in the existing art, the pressure operation function of a newly installed or updated pressure application can be achieved only when the system version or the desktop of a terminal is updated.

## Description

### TECHNICAL FIELD

The present disclosure relates to the field of technologies for applications on terminals and, in particular, to a system and method for implementing pressure function of an application.

### BACKGROUND

At present, pressure-sensitive screens are widely applied to smart terminals. The software function of an intelligent terminal with a pressure-sensitive screen is implemented using the following scheme in the industry: the desktop application Mifavor launcher is used to manage the pressure operation interfaces of other applications on a smart terminal in a uniform manner. That is, in the storage module of the desktop application, an Extensible Markup Language (XML) file or another form of file is used to manage the pressure operation interfaces of other applications on a smart terminal in a uniform manner. After the desktop application is started, the corresponding pressure information can be parsed or the stored pressure information can be directly read. If the pressure operation interface information of a certain application is stored in the desktop, the corresponding pressure function interface can pop up when the icon of this application is heavily pressed. When a finger clicks on the item in the pressure function interface or moves to the item in the pressure function interface and then leaves, the corresponding interface of this application can pop up.

When this scheme is implemented, only when the pressure operation access interface (activity, broadcast, service, URI and the like) information corresponding to an application supporting a pressure-sensitive screen is added to and maintained in the desktop application, can the pressure function operation of the application on a terminal having a pressure-sensitive screen can be performed. Thus, if a third-party application is newly installed, but the pressure operation access interface of this application is not added to and saved in the desktop, then the pressure function operation of this application cannot be performed on the terminal having a pressure-sensitive screen. As another example, if the class name, Uniform Resource Identifier (URI) or other information corresponding to a third-party application supporting the pressure operation function is modified, but such information is not synchronized in the desktop application, then after the pressure function interface of this application pops up and a finger clicks on the corresponding function interface, the corresponding function interface cannot be accessed. It is necessary to update the large version or the desktop of a smart terminal to allow the pressure information interface of a third-party application to be added or to allow the pressure information of the third-party application to be modified. This scheme is low in efficiency and unfriendly in user experience.

### SUMMARY

To overcome the drawbacks of the preceding existing art, a pressure function implementation system and method for an application are provided to solve the problem in which the pressure operation function of a newly installed or updated pressure application can be achieved only when the system version or the launcher of a terminal is updated in the existing art.

To solve the preceding problem, a system for implementing pressure function of an application provided in the present disclosure includes: an information parsing module, configured to parse pressure information from an installation package of the application according to a preset pressure information configuration specification when it is detected that the application is installed or updated on a terminal; and a configuration module, configured to configure pressure operation information of the application according to the pressure information.

Optionally, the pressure information configuration specification includes at least information about a functional interface or service of the application and enabling parameters of the functional interface or service of the application.

Optionally, the system further includes a pressure detection module, configured to detect, on a display interface of the terminal, a pressure value at a position of an icon of the application; and a desktop application module, configured to call the pressure operation information to be displayed on the display interface when the pressure value detected reaches a preset enabling condition for the pressure function.

In an embodiment, the desktop application module is configured to call pressure menu information; make a pressure menu view container pop up on the display interface; and make the pressure menu information displayed in the pressure menu view container.

In an embodiment, the pressure operation information includes at least pressure menu information having at least one menu item; and the desktop application module is further configured to enable a functional interface or service of the application corresponding to a triggered menu item when it is detected that one of the at least one menu item is triggered. Optionally, the preset enabling condition for the pressure function includes that the pressure value at the position of the icon of the application reaches a preset pressure threshold within a preset period of time.

To solve the preceding problem, a method for implementing pressure function of an application provided in the present disclosure includes the following steps: parsing pressure information from an installation package of the application according to a preset pressure information configuration specification when it is detected that the application is installed or updated on a terminal; and configuring pressure operation information of the application according to the pressure information.

Optionally, the pressure information configuration specification includes at least information about a functional interface or service of the application and enabling parameters of the functional interface or service of the application.

Optionally, after the configuring the pressure operation information of the application according to the pressure information, the method further includes detecting, on a display interface of the terminal, a pressure value at a position of an icon of the application; and calling the pressure operation information to be displayed on the display interface when the pressure value detected reaches a preset enabling condition for the pressure function.

In an embodiment, the calling the pressure operation information to be displayed on the display interface includes calling pressure menu information; making a pressure menu view container pop up on the display interface; and making the pressure menu information displayed in the pressure menu view container.

In an embodiment, the pressure operation information includes at least pressure menu information having at least one menu item; and after the calling the pressure operation information to be displayed on the display interface, the method further includes enabling a functional interface or service of the application corresponding to a triggered menu item when it is detected that one of the at least one menu item is triggered.

Optionally, the preset enabling condition for the pressure function includes that the pressure value at the position of the icon of the application reaches a preset pressure threshold within a preset period of time.

The system and method provided in the present disclosure expand the system framework of a terminal, achieve the intellectualization of the pressure function of a pressure application supported by the terminal, overcome the drawback to having to configure the pressure information of the pressure application on the desktop in a unified way, and effectively solve the problem in which it is necessary to update the system version or the desktop of the terminal to implement the pressure operation feature after a pressure information interface is added to the terminal or pressure information is modified in the terminal.

### BRIEF DESCRIPTION OF DRAWINGS

FIG. 1 is a structure diagram illustrating a system for implementing pressure function of an application according to an embodiment of the present disclosure; and
FIG. 2 is a flowchart of a method for implementing pressure function of an application according to an embodiment of the present disclosure.

### DETAILED DESCRIPTION

To solve the problem in which the pressure operation function of a newly installed or updated pressure application can be achieved only when the system version or the desktop of a terminal is updated in the existing art, a system and method for implementing pressure function of an application are provided in the present disclosure. The present disclosure will be described in detail in conjunction with the accompanying drawings and the embodiments. It is to be understood that the embodiments described herein are intended to explain and not to limit the present disclosure.

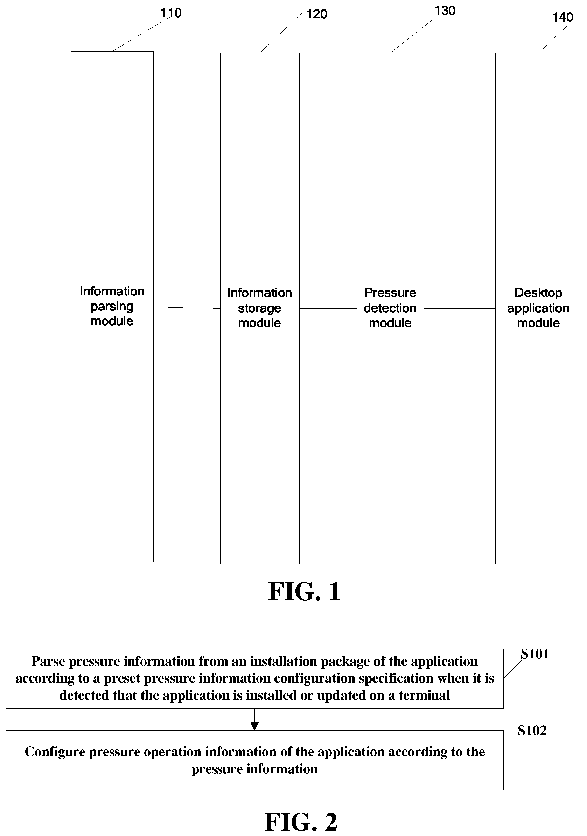

As shown in FIG. 1, the system for implementing pressure function of an application provided in this embodiment of the present disclosure includes: an information parsing module 110, configured to parse pressure information from an installation package of the application according to a preset pressure information configuration specification when it is detected that the application is installed or updated on a terminal; and a configuration module 120, configured to configure pressure operation information of the application according to the pressure information.

The system provided in this embodiment the present disclosure expands the system framework of a terminal, achieves the intellectualization of the pressure function of a pressure application supported by the terminal, overcomes the drawback to having to configure the pressure information of the pressure application on the desktop in a unified way, and avoids the drawback that it is necessary to update the system version or the desktop of the terminal to implement the pressure operation feature after a pressure information interface of a third-party pressure application is added to the terminal or pressure information is modified in the terminal, so as to provide a good solution for the third-party pressure application to support the pressure operation feature.

Based on the preceding embodiment, variations of the preceding embodiment are provided. It is to be noted that, for simplicity of description, only differences from the preceding embodiment are described in the variations of the preceding embodiment.

In an implementation mode of the present disclosure, the pressure information configuration specification includes at least information about a functional interface or service of the application and enabling parameters of the functional interface or service of the application.

In another implementation mode of the present disclosure, the system further includes: a pressure detection module 130, configured to detect, on a display interface of the terminal, a pressure value at a position of an icon of the application; and a desktop application module 140, configured to call the pressure operation information to be displayed on the display interface when the pressure value detected reaches a preset enabling condition for the pressure function.

During implementation, the configuration of the pressure operation information may be specified in the pressure application. For example, various levels of node labels, for example, menu, item, parameter, etc., are defined for the pressure operation information. That is, the pressure menu label, the label of each menu item in the pressure menu, and the like are defined.

The related attributes (className, packageName, type, etc.) of the pressure operation information are defined. That is, the information and parameters for enabling the related functional interface or service in the pressure menu are defined.

The values of the related attributes of the pressure operation information are defined or constrained.

For a third-party application, the corresponding pressure operation information may be configured according to this specification to provide detailed information for the pressure menu. For example, the pressure operation information may be in the format described below.

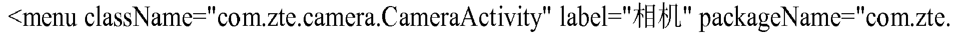

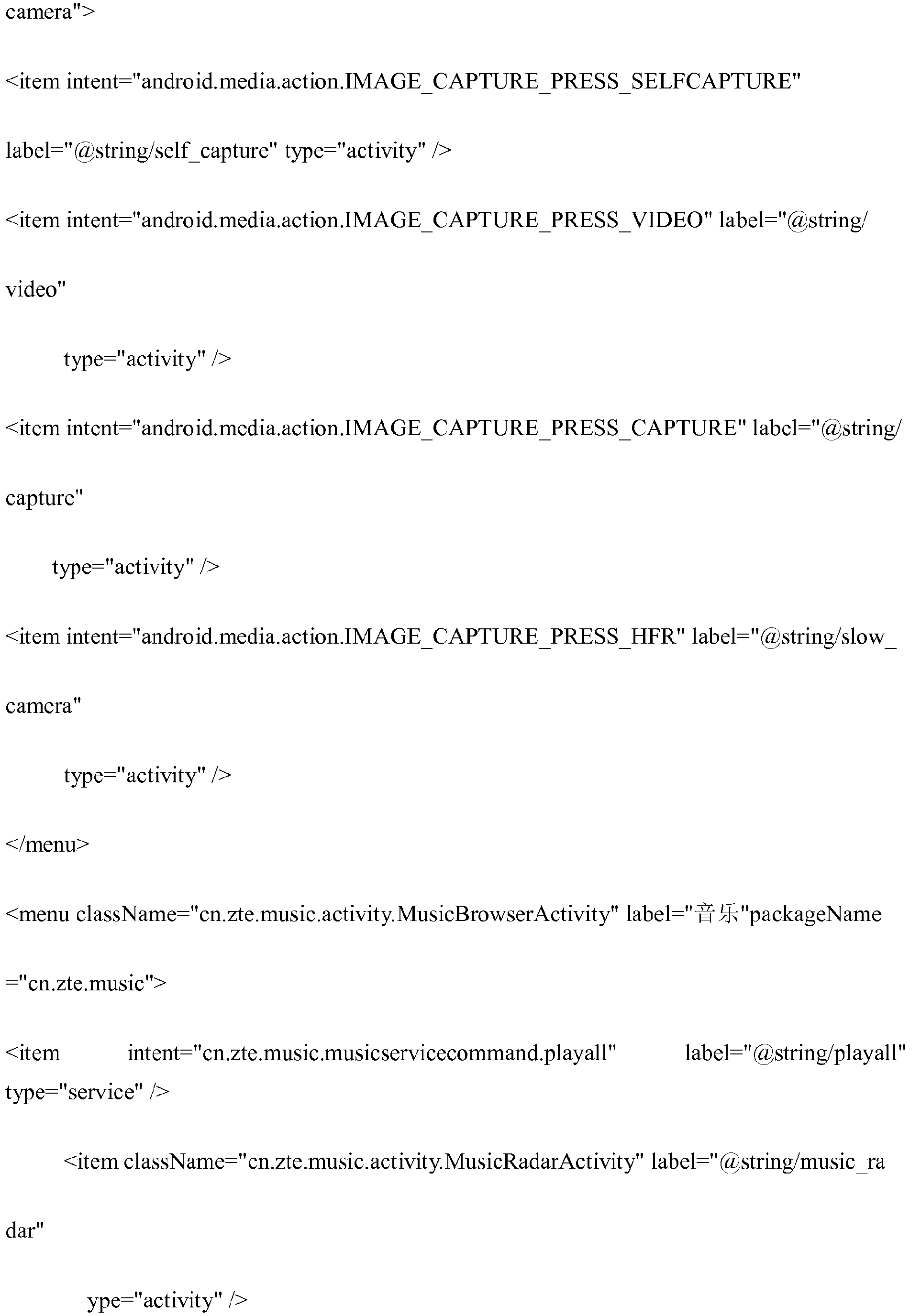

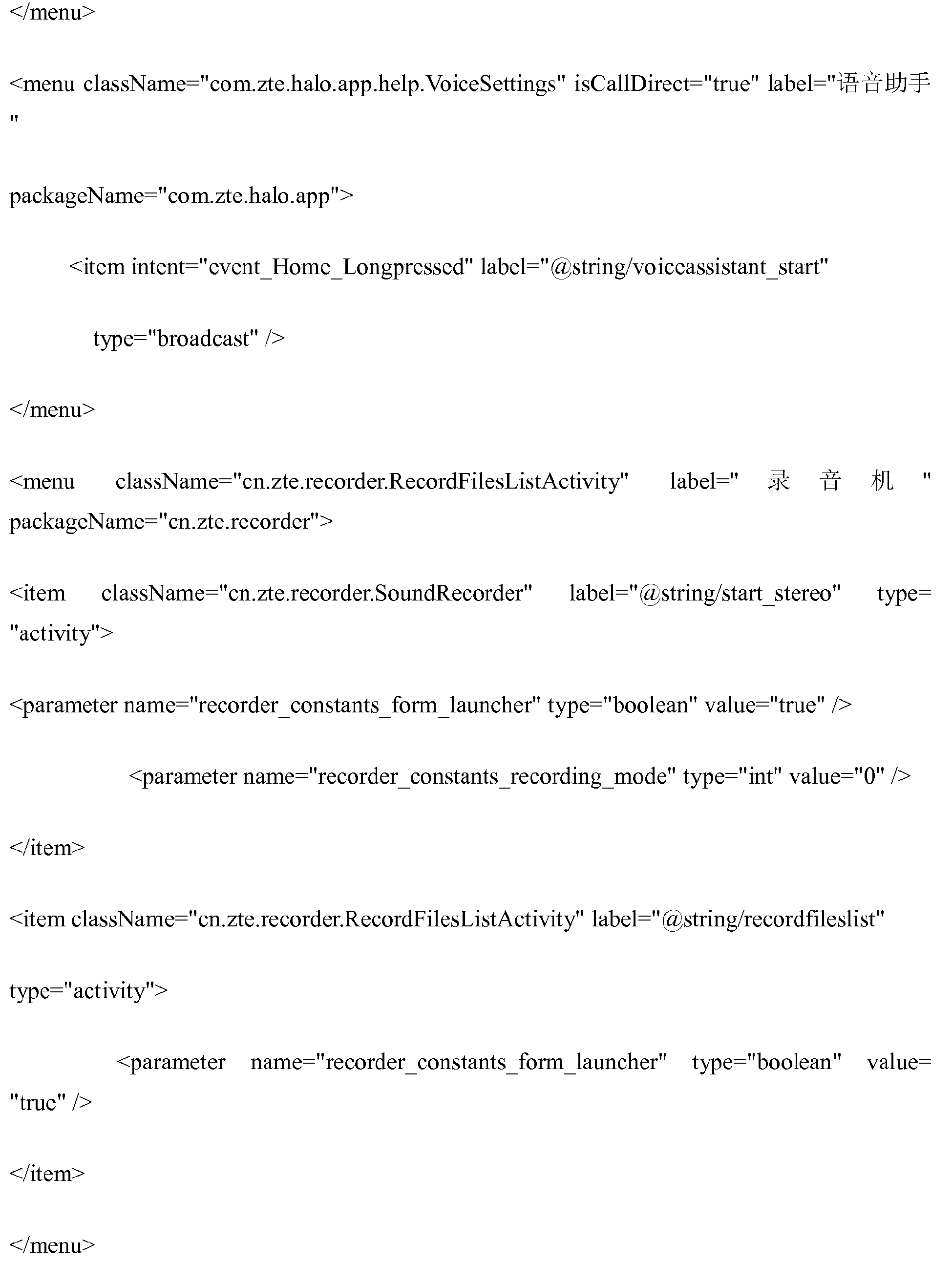

In this implementation mode, the pressure operation information is parsed on the basis of the pressure operation information configuration specification, thereby avoiding the cumbersome maintenance and update process for the application pressure information between the terminal company and the third-party application.

In an embodiment, the system may further include an information storage module configured to store the pressure operation information of the application.

In another implementation mode of the present disclosure, the desktop application module 140 is configured to call pressure menu information; to make a pressure menu view container pop up on the display interface; and to make the pressure menu information displayed in the pressure menu view container.

In an embodiment, the pressure operation information includes at least pressure menu information having at least one menu item; and the desktop application module 140 is further configured to enable a functional interface or service or broadcast of the application corresponding to a triggered menu item when it is detected that one of the at least one menu item is triggered.

In another embodiment, the pressure operation information further includes an identifier of the application. The identifier may be the name of the application, the name of the application installation package, and the like as long as the uniqueness of the application can be identified. The application identifier is not limited herein.

The desktop application module 140 is further configured to acquire the identifier of the application and to acquire the pressure operation information corresponding to the application on the basis of the identifier.

The operation process of this embodiment of the present disclosure is described below through an application example.

In step 1, the desktop application module detects whether pressure on the application icon reaches a heavy pressure threshold during a long-press operation.

In step 2, if the heavy pressure threshold is reached, the desktop acquires heavy pressure icon information (one type of identifier of the application); otherwise, the icon is long-pressed and dragged.

In step 3, the pressure menu information of the corresponding application is acquired from the pressure information storage module through the heavy pressure icon information.

In step 4, the pressure menu view container pops up in an animated way and displays the pressure menu information.

In step 5, the finger moves to the corresponding menu item without leaving the screen, or clicks on the corresponding menu item to call the interface, service or broadcast corresponding to the application according to the menu item information.

Provided is a method for implementing pressure function of an application.

As shown in FIG. 2, a method for implementing pressure function of an application provided in the present disclosure includes the following steps: S101, parsing pressure information from an installation package of the application according to a preset pressure information configuration specification when it is detected that the application is installed or updated on a terminal; and S102, configuring pressure operation information of the application according to the pressure information.

The pressure information configuration specification includes at least information about a functional interface or service of the application and enabling parameters of the functional interface or service of the application.

In an embodiment, after the configuring the pressure operation information of the application according to the pressure information, the method further includes detecting, on a display interface of the terminal, a pressure value at a position of an icon of the application; and calling the pressure operation information to be displayed on the display interface when the pressure value detected reaches a preset enabling condition for the pressure function.

The calling the pressure operation information to be displayed on the display interface includes calling pressure menu information; making a pressure menu view container pop up on the display interface; and making the pressure menu information displayed in the pressure menu view container.

The pressure operation information includes at least pressure menu information having at least one menu item; and after the calling the pressure operation information to be displayed on the display interface, the method further includes enabling a functional interface or service of the application corresponding to a triggered menu item when it is detected that one of the at least one menu item is triggered.

In an embodiment, the preset enabling condition for the pressure function includes that the pressure value at the position of the icon of the application reaches a preset pressure threshold within a preset period of time.

The method provided in this embodiment the present disclosure expands the system framework of a terminal, supports the pressure operation information configured by a third-party application according to a unified pressure operation information specification, achieves the intellectualization of the pressure function of a pressure application supported by the terminal, overcomes the drawback to having to configure the pressure information of the pressure application on the desktop in a unified way, and avoids the drawback that it is necessary to update the system version or the desktop of the terminal to implement the pressure operation feature after a pressure information interface of the third-party application is added to the terminal or pressure information is modified in the terminal, so as to provide a good solution for the third-party application to support the pressure operation feature. Another advantage of this scheme is that all smart terminal companies and third-party applications can follow this specification, avoiding the cumbersome maintenance and update process for the application pressure information between the intelligent terminal company and the third-party application.

The system for implementing pressure function of an application described in connection with the examples disclosed herein may be directly embodied as hardware, a software module executed by a processor, or a combination of thereof. For example, one or more of the functional block diagrams shown in FIG. 1 and/or one or more combinations (for example, information parsing module) of the functional block diagrams shown in FIG. 1 may correspond to various software modules of a computer program flow or may correspond to various hardware modules. These software modules may correspond to the respective steps shown in FIG. 2. These hardware modules can be implemented, for example, by these software modules cured using a Field Programmable Gate Array (FPGA).

A software module may reside in a RAM memory, flash memory, ROM memory, EPROM memory, EEPROM memory, register, hard disk, mobile hard disk, CD-ROM, or any other form of storage medium known in the art. A storage medium may be coupled to a processor to enable the processor to read information from and write information to the storage medium; or the storage medium can be an integral part of the processor. The processor and the storage medium may be located in an application-specific integrated circuit. This software module may be stored in the memory of a mobile terminal or in a memory card that can be inserted into the mobile terminal. For example, if the mobile terminal uses a MEGA-SIM card having a relatively large capacity or uses a large-capacity flash memory device, this software module may be stored in the MEGA-SIM card or the large-capacity flash memory device.

One or more of the functional block diagrams illustrated in FIG. 1 and/or one or more combinations of the functional block diagrams illustrated in FIG. 1 may be implemented as a general purpose processor, digital signal processor (DSP), application-specific integrated circuit (ASIC), field programmable gate array (FPGA) or another programmable logic device, discrete gate or transistor logic device, discrete hardware component, or any suitable combination thereof that is configured to implement the functions described in the present application. One or more of the functional block diagrams illustrated in FIG. 1 and/or one or more combinations of the functional block diagrams illustrated in FIG. 1 may also be implemented as a combination of computer devices, for example, a combination of a DSP and a microprocessor, a plurality of microprocessors, one or more microprocessors in communication with the DSP, or any other such configuration.

While the present application is described with respect to the specific examples of the present disclosure, those skilled in the art can devise variations of the present disclosure without departing from the inventive concept of the present disclosure.

Inspired by the inventive concept of the present disclosure, those skilled in the art can make various improvements to the method of the present disclosure without departing from the content of the present disclosure. These improvements are within the scope of the present disclosure.

### INDUSTRIAL APPLICABILITY

The present disclosure is applicable to the field of technologies for applications on terminals, expands the system framework of a terminal, achieves the intellectualization of the pressure function of a pressure application supported by the terminal, and effectively solves the problem in which the pressure operation function of a newly installed or updated pressure application can be achieved only when the system version or the desktop of a terminal is updated in the existing art.

## Claims

1. A system for implementing pressure function of an application, comprising:
an information parsing module, configured to parse pressure information from an installation package of the application according to a preset pressure information configuration specification when it is detected that the application is installed or updated on a terminal; and
a configuration module, configured to configure pressure operation information of the application according to the pressure information.

2. The system of claim 1, wherein the pressure information configuration specification comprises at least information about a functional interface or service of the application and enabling parameters of the functional interface or service of the application.

3. The system of claim 1, further comprising:
a pressure detection module, configured to detect, on a display interface of the terminal, a pressure value at a position of an icon of the application; and
a desktop application module, configured to call the pressure operation information to be displayed on the display interface when the pressure value detected reaches a preset enabling condition for the pressure function.

4. The system of claim 3, wherein the desktop application module is configured to:
call pressure menu information;
make a pressure menu view container pop up on the display interface; and
make the pressure menu information displayed in the pressure menu view container.

5. The system of claim 3 or 4, wherein the pressure operation information comprises at least pressure menu information having at least one menu item; and
the desktop application module is further configured to enable a functional interface or service of the application corresponding to a triggered menu item when it is detected that one of the at least one menu item is triggered.

6. The system of any one of claims 1 to 4, wherein the preset enabling condition for the pressure function comprises:
the pressure value at the position of the icon of the application reaching a preset pressure threshold within a preset period of time.

7. A method for implementing pressure function of an application, comprising:
parsing pressure information from an installation package of the application according to a preset pressure information configuration specification when it is detected that the application is installed or updated on a terminal; and
configuring pressure operation information of the application according to the pressure information.

8. The method of claim 7, wherein the pressure information configuration specification comprises at least information about a functional interface or service of the application and enabling parameters of the functional interface or service of the application.

9. The method of claim 7, wherein after the configuring pressure operation information of the application according to the pressure information, the method further comprises:
detecting, on a display interface of the terminal, a pressure value at a position of an icon of the application; and
calling the pressure operation information to be displayed on the display interface when the pressure value detected reaches a preset enabling condition for the pressure function.

10. The method of claim 9, wherein the calling the pressure operation information to be displayed on the display interface comprises:
calling pressure menu information;
making a pressure menu view container pop up on the display interface; and
making the pressure menu information displayed in the pressure menu view container.

11. The method of claim 9 or 10, wherein the pressure operation information comprises at least pressure menu information having at least one menu item; and after the calling the pressure operation information to be displayed on the display interface, the method further comprises:
enabling a functional interface or service of the application corresponding to a triggered menu item when it is detected that one of the at least one menu item is triggered.

12. The method of any one of claims 7 to 10, wherein the preset enabling condition for the pressure function comprises:
the pressure value at the position of the icon of the application reaching a preset pressure threshold within a preset period of time.

13. A computer storage medium storing executable instructions used for executing the method of any one of claims 7 to 12.
